Europäisches Patentamt

European Patent Office

Office européen des brevets

(11) Publication number: **0 411 742 A2**

# EUROPEAN PATENT APPLICATION

(21) Application number: **90303230.8**

(22) Date of filing: **27.03.90**

(51) Int. Cl.5: **H04Q 3/68, H04Q 11/04**

(30) Priority: **03.08.89 GB 8917738**

(43) Date of publication of application:
**06.02.91 Bulletin 91/06**

(84) Designated Contracting States:
**BE DE DK ES FR GR IT LU NL SE**

(71) Applicant: **GEC PLESSEY TELECOMMUNICATIONS LIMITED**
**New Century Park P.O. Box 53**
**Coventry, CV3 1HJ(GB)**

(72) Inventor: **Proctor, Richard John**
**28 Diprose Road, Corfe Mullen**
**Wimborne, Dorset(GB)**
Inventor: **Whitehead, John Andrew**
**77 Russley Road**
**Bramcote, Nottingham(GB)**
Inventor: **Temperton, David Roy**
**16 Shirley Crescent**
**Breaston, Derby DE7 3BZ(GB)**

(74) Representative: **Allen, Derek**
**The Plessey Company Limited Intellectual**
**Property Department Vicarage Lane**
**Ilford Essex, IG1 4AQ(GB)**

(54) **Message switching arrangements.**

(57) The message switching arrangement comprising a plurality central message switching units, and a plurality of outer message switching units each capable of transmitting and receiving messages in time division multiplex form on paths. The number of outer message switching units is greater than the number of central message switching units and are interconnected so that a receive path of any outer message switching unit can be connected to a transmit path of another outer message switching unit. The choice of path by way of any central message switching unit is dictated by an algorithm $K = (Li + Lo)$ Mod $Nc$ where $Li$ is a full link address of an incoming link, $Lo$ is a full link address of an outgoing link and $Nc$ is the number of central message switching units.

## MESSAGE SWITCHING ARRANGEMENTS

The present invention relates to a message switching arrangement.

The present invention finds utility in the area of telecommunications, such digital telecommunication exchanges known as System X. The function of such exchanges are described in an article by A.S. Philip, entitled "The System X Digital Switching Subsystem" published in Systems Technology No. 32, September 1979.

All messages are passed by way of a central stage of the switching arrangement. The links use the following UK protocols:-Digital Access Signalling System No. 2 (DASS 2) and Digital Private Network Signalling System (DPNSS). In System X type exchanges, the central stages are combined with central message switching units CMSUs. A path via any CMSU can be used to forward messages across the switching arrangement since all CMSUs have paths connected to all outgoing message switching units OMSUs. Such an algorithm is particularly useful in such systems because the load on each side of the switching arrangements is approximately equal, and each message transmitted between two points is switching along the same route so that sections of a message do not overtake each other. To obtain efficient use of the switching arrangement, a choice of path is based on an algorithm which meets the following criteria:-

a. All messages routed between any to DASS2/DPNSS type signalling links should be passed via the same CMSU in order to avoid possible problems with message sequence due to unequal queuing delays on different paths.

b. The internal links, being duplex, should use the same path for both directions of transmission.

c. The message traffic should be evenly distributed over the CMSUs.

An aim of the present invention is to provide a message switching arrangement which executes an algorithm in accordance with the above criteria.

The present invention has the advantages of efficient use of the switching arrangement, whereby queuing delays are reduced, the same path is used for duplex operation and traffic is evenly distributed over the CMSUs.

According to the present invention, there is provided a message switching arrangement comprising a plurality central message switching units, and a plurality of outer message switching units each capable of transmitting and receiving messages in time division multiplex form on paths, and wherein the number of outer message switching units is greater than the number of central message switching units and are interconnected so that a receive path of any outer message switching unit can be connected to a transmit path of another outer message switching unit, characterised in that the choice of path by way of any central message switching unit is dictated by an algorithm $K = (Li + Lo)$ Mod Nc where Li is a full link address of an incoming link, Lo is a full link address of an outgoing link and Nc is the number of central message switching units.

According to an aspect of the present invention each message switching unit has an associated routing map which is addressed by the message switching unit and enables the message switching unit to route incoming messages to a particular outgoing time division multiplex timeslot.

An embodiment of the present invention will now be described with reference to the accompanying drawings wherein:-

Figure 1 shows a block diagram of a three-stage switching arrangement, and,

Figure 2 shows exemplary entries in a message switching unit map.

Each traffic channel controlled by DASS2 or DPNSS signalling has associated with it a Link Access Protocol (LAP) which operates in parallel with other LAPs over the signalling channel (timeslot 16 of the PCMs). The multiple LAPs are functionally independent and logically isolated from one another through the layer 2 addresses carried by individual frames.

The digital switching subsystem, DSS concentrates the timeslots 16's, the signalling channels, from the external pulse code modulation PCM links onto the outer or maintenance MSUs, using switch paths on the DSS.

The function of the Message Switch is two fold. Firstly to provide port and LAP interchange of call control messages in the signalling channel to match the equivalent circuit switched paths through the DSS, and secondly to provide a message route between the Customer Service Module CSM and the CSM controller function, for maintenance messages.

The call control messages are in LAP numbers 1 to 15 and 17 to 31. LAP 0 is not used as there is no traffic channel 0. The Message Switch terminates these LAPs and extracts the higher level message content for re-transmission to the destination.

For DPNSS, virtual LAPs exist on LAPs 33 to 47 and 49 to 63. These need to routed along with the real LAPs. There is a one-to-one relationship of the virtual LAPs and the real LAPs.

There are no signalling LAPs associated with timeslot 0, TSO, when paths are set-up using TSO, no signalling will be attempted.

The Message Switch function is realised by the addition of the MSU serial interface units to the DSS switch.

The MSUs are arranged as a three stage switch for message routing in the following schematic way. All the connections are made by switch paths. There are nominally 24 paths which are made to each outer MSU from the external PCM links. Each outer MSU connects to all 8 central MSUs. The central MSUs are connected to all 32 Outer MSUs.

The message routing capability is realised by a number of identical Message Switching Units (MSU) interconnected to form a three-stage message switch of the required capacity. Each MSU is essentially a fully available message switch in its own right, providing connections between 32 channels.

The MSUs are interconnected via the circuit switch. The circuit switching function provides flexibility of circuit allocation and facilitates the implementation of a security scheme based on 1 in N redundancy of MSUs; it is not otherwise involved in message routing.

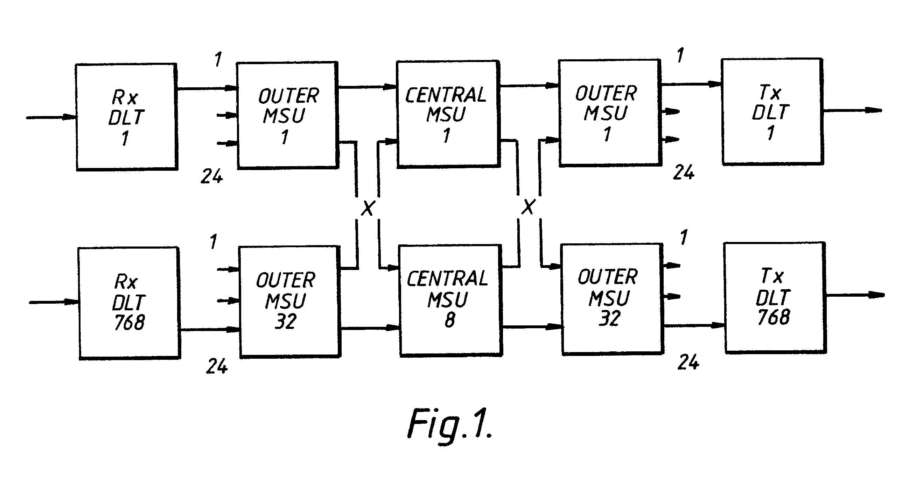

To provide up to a 768 DASS2/DPNSS signalling ports message router, the MSUs are arranged as a three stage switch as shown in Figure 1, the RX outer MSUs are the same as the TX outer MSUs hence only $32 + 8$ MSUs are used. The outer switches consist of 32 MSUs and the central switches consist of 8 MSUs. This particular configuration offers enough MSUs both to the outer and central switches so as not to overload either layer. The outer which MSUs have a higher work load per message than the central MSUs. Some of the tasks performed by the outer MSU includes the acknowledgement at layer 2 to the sending terminal, addition of source and destination address of the received frame before sending to central MSU, and recalculation of the Frame Check Sequence (FCS).

The task performed by the central MSUs is simply to route a message from one outer MSU to another.

There are up to an additional 40 MSUs provided in the maintenance message terminator which will terminate maintenance messages from a further 1280 PCM links on the DSS, these are connected by switch paths, but are not message switched.

The following algorithm enables the aims of the present invention to be realised

$K = (Li + Lo)$ Moduli Nc

Where Li = the full link address of the incoming DASS2/DPNSS link.

Lo = the full link address of the outgoing DASS2/DPNSS link.

Nc = Number of CMSUs.

This algorithm is applied by the first stage routing function to derive the integer, K (less than Nc), as an index into the internal channel logical number to physical channel translation table in order to determine which of the available channels to the central stage is to be used.

A translation is held between CMSU logical number and physical channel number for internal channels. The translation is used in selection of a central MSU for the routing of messages. OMSUs will normally set up the translation such that Logical CMSU n is accessed via channel n. During switch reconfiguration around faults in the central stage, OMSUs will change their CMSU Logical number to channel translations so as to map out faulty CMSUs specified in Switch Re-configuration messages.

Message switching is achieved by utilising interconnected MSUs to route messages across the Message Switch. Within the switch, the outer MSUs route the messages by referring to the switch maps they hold, but the central MSUs route the messages according to their message content. Therefore, the maps on central MSUs are not utilised. The switching stages are referred to by number, the "receive" outer MSU is stage 1, the central MSU stage 2, and the transmit MSU stage 3. Stages 1 and 3 require routing maps. The maps hold details of the links, and they are symmetrical, i.e. one set of information about a link allows the MSU to perform stage 1 or stage 3 functions.

The key-element in the switching is the map. The map has 32 x 32 entries, each entry is 4 bytes long, and each MSU has its own map. Thus the map is 4k bytes long. Data held in the Map allows the MSU to route incoming messages to the correct outgoing timeslot and LAP, and needs to be held on a dynamic basis. The map may be considered as an array, with one index being the incoming/outgoing timeslot number, and the other index being the LAP number. Two anomalies exist within the map. Firstly, the top "n" channels of the map will always be empty. These are the channels that cross-connect to the "n" stage MSUs. Secondly, there is no such thing as LAP 0, although space is allocated in the map for it. This is to ease access to the map, but since space is conveniently present for each channel, it can be used to indicate whether that channel is enabled or disabled, i.e. whether it is connected to an external timeslot TS16, or not, and if so, whether the MSU should obey exchange termination ET or private branch exchange PBX protocol for all the LAPs on that channel.

The allocation of channels on an outer MSU that connect it to the central MSUs is as follows. Channel n always links the outer MSU to central MSU n. This means that in the 32-8-32 configuration, channel 0 on the outer MSU is connected to CMSU 0, channel 1 to CMSU 1 etc. Channels x to 31 may be used to connect to external TS16s, where "x" is given by the formula:

x = (32 - No. of DASS/DPNSS channels on an OMSU),

This means that in the 32-8-32 configuration, all 32 channels on a central MSU will be connected and enabled. (Hence the upper limit of 32 outer MSUs). If less outer MSUs are equipped, several channels on the centrals may be spare, but this does not imply it will have a lower throughput.

## MESSAGE INCOMING FROM NETWORK

A message from the network will come in on a timeslot, the timeslot number gives one index into the Map. Reading the content of the message gives the LAP number and therefore the other index into the Map. The Map entry for the timeslot and LAP can be read, and the extended address, formed and appended to the message. When the lengths, CRC check fields etc. to satisfy the internal protocol have been added to the 64 byte block, it can be transmitted on an internal channel, decided upon by the algorithm. Note that what is referred to as "Far end" information in the Map, is the same as the "Destination" information in the extended address. It is not called destination information in the Map, because it serves to route data in two directions.

## MESSAGE INCOMING ACROSS THE SWITCH FROM A CENTRAL

A message coming in (to a stage 3 MSU) across the switch from a central MSU will have an extended address field appended. The stage 3 MSU can validate the extended address field. The Destination MSU should be itself. Using the field's destination channel number and destination LAP number in the extended address, the stage 3 MSU can look up in its Map the far end MSU no. (=orig MSU no. in the message), far end channel no. (=orig channel no. in the message), far end LAP no. (=orig LAP no. in the message) and protocol type.

| Orig. MSU No. |
| Orig. Ch. No. |
| Orig. LAP No. |
| Dest. MSU No. |
| Dest. Ch. No. |
| Dest. LAP No. |

The following details are of the Internal Routing Information to be Appended to end of the Message for Transmission Across Switch.

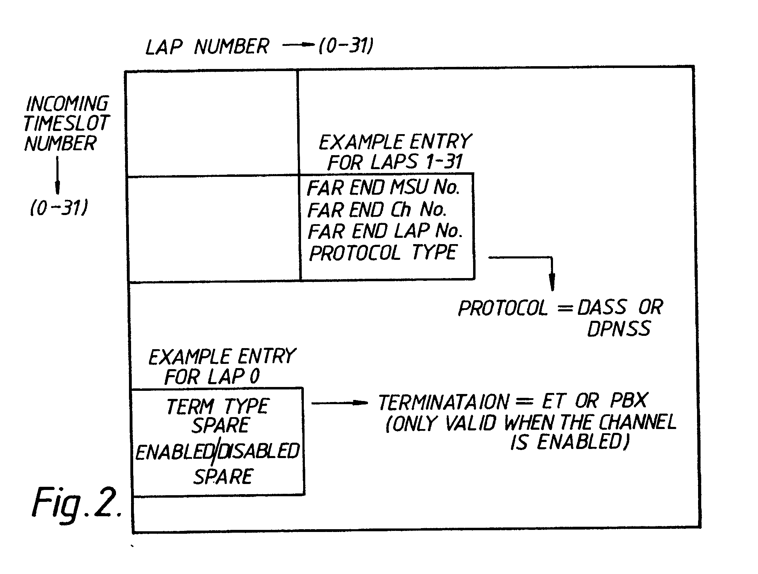

Referring to Figure 2, the MSU routing map is shown.

The Map is represented here for clarity as a two-dimensional array, however this does not constrain the implementation as a one-dimensional array may be more convenient to design around.

This should not be taken as requiring that when implemented, the routing information, i.e. MSU, channel and LAP, must be held in the same array as the termination and protocol type information. In fact, it may make for more efficient routing firmware if they were held separately.

The Map is suitable for routing messages in either direction, i.e. incoming from network or incoming across the switch from a central MSU.

## Claims

1. A message switching arrangement comprising a plurality central message switching units, and a plurality of outer message switching units each capable of transmitting and receiving messages in time division multiplex form on paths, and wherein the number of outer message switching units is greater than the number of central message switching units and are interconnected so that a receive path of any outer message switching unit can be connected to a transmit path of another outer message switching unit, characterised in that the choice of path by way of any central message switching unit is dictated by an algorithm $K = (Li + Lo)$ Mod Nc where Li is a full link address of an incoming link, Lo is a full link address of an outgoing link and Nc is the number of central message switching units.

2. A message switching arrangement as claimed in Claim 1, wherein each message switching unit has an associated routing map which is addressed by the message switching unit and enables the message switching unit to route incoming messages to a particular outgoing time division multiplex timeslot.

3. A message switching arrangement as claimed in Claim 2, wherein the message switching unit uses the timeslot number of an incoming/outgoing message as part of the address for the map, and obtains a link access protocol number from the message and uses it as the remaining part of the map address.

Fig.1.

EP 0 411 742 A2

LAP NUMBER ——►(0-31)

INCOMING
TIMESLOT
NUMBER

(0-31)

| EXAMPLE ENTRY FOR LAPS 1-31 |
| --- |
| FAR END MSU No.<br>FAR END Ch No.<br>FAR END LAP No.<br>PROTOCOL TYPE |

PROTOCOL = DASS OR
DPNSS

EXAMPLE ENTRY
FOR LAP 0

| TERM TYPE<br>SPARE<br>ENABLED/DISABLED<br>SPARE |
| --- |

→ TERMINATAION = ET OR PBX
(ONLY VALID WHEN THE CHANNEL
IS ENABLED)

Fig.2.

EP 0 411 742 A2